# EUROPÄISCHE PATENTSCHRIFT

(11) **EP 2 262 649 B1**
(45) Veröffentlichungstag und Bekanntmachung des Hinweises auf die Patenterteilung: **23.01.2013**
(21) Anmeldenummer: 09716371.1
(22) Anmeldetag: 17.02.2009
(51) Int. Cl.: B42D 15/00, B42D 15/10

(54) **SICHERHEITSELEMENT UND VERFAHREN ZU SEINER HERSTELLUNG**
SECURITY ELEMENT AND METHOD FOR THE PRODUCTION THEREOF
ÉLÉMENT DE SÉCURITÉ ET SON PROCÉDÉ DE FABRICATION

(30) Priorität: 07.03.2008 DE 102008013167
(43) Veröffentlichungstag der Anmeldung: 22.12.2010
(73) Patentinhaber: Giesecke & Devrient GmbH, 81677 München (DE)
(72) Erfinder: HEIM, Manfred, 83646 Bad Tölz (DE)
(86) Internationale Anmeldenummer: PCT/EP2009/001094
(87) Internationale Veröffentlichungsnummer: WO 2009/109291

(56) Entgegenhaltungen:
- WO-A-2005/038136
- DE-A1-102004 051 919
- DE-A1-102006 015 023

## Beschreibung

Die Erfindung betrifft ein Sicherheitselement zur Absicherung von Wertgegenständen, ein Verfahren zur Herstellung eines derartigen Sicherheitselements sowie ein Sicherheitspapier und einen Datenträger mit einem solchen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Derartige Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgebrachten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Die Sicherheitselemente werden dazu mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

In diesem Zusammenhang ist bekannt, Sicherheitselemente mit mehrschichtigen Dünnschichtelementen einzusetzen, deren Farbeindruck sich für den Betrachter mit dem Betrachtungswinkel ändert und beim Kippen des Sicherheitsmerkmals beispielsweise von Grün nach Blau, von Blau nach Magenta oder von Magenta nach Grün wechselt. Das Auftreten derartiger Farbänderungen beim Verkippen eines Sicherheitselements wird im Folgenden als Farbkippeffekt bezeichnet.

Das Dokument WO 2005/038 136 A offenbart ein Sicherheitselement zur Absicherung von Wertgegenständen.

Ausgehend davon liegt der Erfindung die Aufgabe zugrunde, ein Sicherheitselement der eingangs genannten Art weiter zu verbessern und insbesondere ein Sicherheitselement mit einem attraktiven visuellen Erscheinungsbild und hoher Fälschungssicherheit zu schaffen.

Diese Aufgabe wird durch das Sicherheitselement mit den Merkmalen des Hauptanspruchs gelöst. Ein Verfahren zur Herstellung eines derartigen Sicherheitselements, ein Sicherheitspapier und ein Datenträger sind in den nebengeordneten Ansprüchen angegeben. Weiterbildungen der Erfindung sind Gegenstand der Unteransprüche.

Gemäß der Erfindung sind bei einem Sicherheitselement der eingangs genannten Art
- übereinander ein Dünnschichtelement mit Farbkippeffekt und eine in einer Prägelackschicht vorliegende Reliefstruktur angeordnet,
- ist die Prägelackschicht mit der Reliefstruktur in Teilbereichen metallisiert, und
- ist die Reliefstruktur der teilweise metallisierten Prägelackschicht mit einer transparenten Lackschicht eingeebnet, deren Brechungsindex im Wesentlichen dem Brechungsindex der Prägelackschicht entspricht.

Die Erfindung beruht dabei auf dem Gedanken, eine gegenseitige visuelle Beeinflussung des Farbkippeffekts des Dünnschichtelements und des optisch variablen Effekts der Reliefstruktur dadurch zu vermeiden, dass die optische Wirkung der Reliefstruktur in den Bereichen, in denen nur der Farbkippeffekt des Dünnschichtelements sichtbar sein soll, durch eine geeignet ausgebildete transparente Lackschicht neutralisiert wird. Der Farbkippeffekt des Dünnschichtelements und der optisch variable Effekt der Reliefstruktur sind dann ohne gegenseitige Beeinflussung jeweils mit ihrer spezifischen Farbwirkung sichtbar. Gleichzeitig scheinen die farbkippenden Bereiche und die Reliefstrukturbereiche für den Betrachter in perfekter Passerung nebeneinanderzuliegen, ohne dass es erforderlich wäre, das Dünnschichtelement selbst gepassert zu den Reliefsstrukturen anzuordnen, wie nachfolgend genauer erläutert.

Um die Reliefstruktur einzuebnen, wird die transparente Lackschicht vorzugsweise in einer Schichtdicke von mehr als 800 nm, insbesondere von mehr als 1.000 nm aufgebracht. Die Differenz der Brechungsindices von Prägelackschicht und transparenter Lackschicht beträgt bevorzugt weniger als 0,3, besonders bevorzugt sogar weniger als 0,1. Um den Farbeindruck des Dünnschichtelements gezielt zu modifizieren, kann die transparente Lackschicht auch lasierend eingefärbt sein. Vorzugsweise ist die transparente Lackschicht wickelbar und tackfrei ausgebildet.

Je nach Aufbau des Folienelements haftet die transparente Lackschicht darüber hinaus zweckmäßig gleichzeitig gut auf dem Prägelack, einer Reflektorschicht und einer dielektrischen Abstandsschicht bzw. einer Absorberschicht des Dünnschichtelements. Dadurch wird gewährleistet, dass ein Dünnschichtaufbau aus einem Hologramm und einer Interferenzstruktur beispielsweise auf einer Banknote umlaufbeständig gegen mechanische Einwirkungen ist. Eine gute Haftung des Schichtverbunds verringert auch dessen chemische Angreifbarkeit. Um die Beständigkeit gegen chemische Angriffe weiter zu erhöhen, ist der Lack besonders bevorzugt zusätzlich nur schlecht nachträglich in wässrigen oder lösemittelhaltigen Flüssigkeiten löslich.

Die Reliefstruktur der Prägelackschicht kann eine diffraktive Struktur darstellen, wie etwa ein Hologramm, ein holographisches Gitterbild oder eine hologrammähnliche Beugungsstruktur, oder auch eine achromatische Struktur, wie etwa eine Mattstruktur mit einem nicht farbigen, silbrig matten Erscheinungsbild, eine Mikrospiegelanordnung, ein Blazegitter mit einem sägezahnartigen Furchenprofil oder eine Fresnellinsen-Anordnung. Die Abmessungen der Strukturelemente der diffraktiven Reliefstrukturen liegen meist in der Größenordnung der Lichtwellenlänge, also in der Regel zwischen 300 nm und 1 µm. Manche Reliefstrukturen weisen auch kleinere Strukturelemente auf, wie etwa Subwellenlängengitter oder Mottenaugenstrukturen, deren Strukturelemente auch kleiner als 100 nm sein können. Die Strukturelemente achromatischer Mikroreliefstrukturen sind teilweise auch größer als 1 µm, die Abmessungen von Mikrospiegeln oder Blazegitterlinien reichen etwa bis zu einer Höhe von etwa 15 µm und einer lateralen Ausdehnung von etwa 30 µm.

Das Dünnschichtelement weist in einer vorteilhaften Erfindungsvariante eine Reflexionsschicht, eine Absorberschicht und eine zwischen der Reflexionsschicht und der Absorberschicht angeordnete dielektrische Abstandsschicht auf. Der Farbkippeffekt beruht bei solchen Dünnschichtelementen auf betrachtungswinkelabhängigen Interferenzeffekten durch Mehrfachreflexionen in den verschiedenen Teilschichten des Elements. Der Wegunterschied des an den verschiedenen Schichten reflektierten Lichts hängt einerseits von der optischen Dicke der dielektrischen Abstandsschicht ab, die den Abstand zwischen Absorberschicht und Reflexionsschicht festlegt, und variiert andererseits mit dem jeweiligen Betrachtungswinkel.

Da der Wegunterschied in der Größenordnung der Wellenlänge des sichtbaren Lichts liegt, ergibt sich aufgrund von Auslöschung und Verstärkung bestimmter Wellenlängen ein winkelabhängiger Farbeindruck für den Betrachter. Durch eine geeignete Wahl von Material und Dicke der dielektrischen Abstandsschicht können eine Vielzahl unterschiedlicher Farbkippeffekte gestaltet werden, beispielsweise Kippeffekte, bei denen sich der Farbeindruck mit dem Betrachtungswinkel von Grün nach Blau, von Blau nach Magenta oder von Magenta nach Grün ändert.

In einer vorteilhaften Erfindungsvariante ist das Dünnschichtelement in der Schichtreihenfolge Absorberschicht, dielektrische Abstandsschicht und Reflexionsschicht über der teilweise metallisierten Prägelackschicht und der transparenten Lackschicht angeordnet. Alternativ kann auch die teilweise metallisierte Prägelackschicht und die transparente Lackschicht über einem Dünnschichtelement der Schichtreihenfolge Reflexionsschicht, dielektrische Abstandsschicht und Absorberschicht angeordnet sein. Der letztgenannte Schichtaufbau eignet sich insbesondere für Sicherheitselemente, die von der Oberseite her betrachtet werden sollen, während der erstgenannte Schichtaufbau insbesondere für Sicherheitselemente geeignet ist, die von der Unterseite, also der Rückseite einer Trägerfolie her betrachtet werden sollen.

In allen Gestaltungen ist die dielektrische Abstandsschicht vorzugsweise durch ein Vakuumdampfverfahren erzeugt. Alternativ kann die Abstandsschicht auch durch eine Druckschicht oder durch eine ultradünne Folie, insbesondere eine gereckte Polyesterfolie, gebildet sein. Besonders bevorzugt ist gegenwärtig eine Gestaltung, bei der die dielektrische Abstandsschicht durch eine niedrigbrechende dielektrische Schicht, insbesondere eine aufgedampfte SiO₂-Schicht oder eine MgF₂-Schicht gebildet ist.

Weitere Einzelheiten zum Aufbau derartiger Dünnschichtelemente und zu den für die Reflexionsschicht, die dielektrische Abstandsschicht und die Absorberschicht einsetzbaren Materialien und Schichtdicken können der Druckschrift WO 01/03945 entnommen werden, deren Offenbarung insoweit in die vorliegende Anmeldung aufgenommen wird.

Die Metallisierung der Prägelackschicht kann mit Vorteil mit Aussparungen in Form von Mustern, Zeichen oder Codierungen versehen sein, die den Blick auf das Dünnschichtelement freigeben und so innerhalb der Metallisierung Negativinformationsbereiche mit einer kontrastierenden Farbwirkung schaffen. Auch das Dünnschichtelement kann eine Reflexionsschicht mit Aussparungen in Form von Mustern, Zeichen oder Codierungen aufweisen, die transparente oder transluzente Bereiche in dem Dünnschichtelement bilden. Durch eine Kombination von Aussparungen in der Metallisierung der Prägelackschicht mit deckungsgleichen Aussparungen zumindest in der Reflexionsschicht des Dünnschichtelements können auch innerhalb der metallisierten Reliefbereiche transparente oder transluzente Durchsichtsbereiche erzeugt werden.

In einer vorteilhaften Weiterbildung der Erfindung ist das Sicherheitselement bereichsweise mit einer transparenten Phasenverzögerungsschicht versehen, die für Licht aus dem sichtbaren Wellenlängenbereich eine phasenschiebende Schicht bildet. Phasenverzögernde Schichten, die im Rahmen dieser Beschreibung teilweise auch phasenschiebende Schichten genannt werden, sind optisch aktive Schichten, die auf die Phase einer transmittierten Lichtwelle wirken. Die Teilstrahlen einer einfallenden polarisierten Lichtwelle erhalten dabei aufgrund unterschiedlicher Brechzahlen einen Gangunterschied und somit eine Phasendifferenz. Beträgt die Phasendifferenz der beiden Teilstrahlen gerade eine halbe oder viertel Wellenlänge so erhält man sogenannte λ/2- oder λ/4-Schichten.

In einer weiteren vorteilhaften Ausgestaltung der Erfindung ist über dem Dünnschichtelement bereichsweise eine semitransparente Farbschicht angeordnet, wobei der Farbeindruck des Dünnschichtelements bei Betrachtung unter vorbestimmten Betrachtungsbedingungen an den Farbeindruck zumindest eines Teilbereichs der semitransparenten Farbschicht angepasst ist.

Bevorzugt weist die semitransparente Farbschicht in einem Spektralbereich, in dem der Farbeindruck des Dünnschichtelements an den Farbeindruck der semitransparenten Schicht angepasst ist, eine Lichtdurchlässigkeit zwischen 30% und 95%, besonders bevorzugt zwischen 60% und 95% und ganz besonderes bevorzugt zwischen 80% und 95% auf.

Die semitransparente Farbschicht kann auf verschiedene Weise aufgebracht werden, mit Vorteil ist sie aufgedruckt, beispielsweise im Siebdruck-, Tiefdruck-, Flexodruck- oder einem anderen geeigneten Druckverfahren. Die semitransparente Farbschicht kann dabei direkt auf das Dünnschichtelement aufgedruckt sein, es können jedoch zwischen Farbschicht und Dünnschichtelement auch transparente Zwischenschichten vorgesehen sein, die beispielsweise als Schutzschicht oder Kleberschicht wirken. Auch zwischen der Farbschicht und der oben genannten Phasenverzögerungsschicht können derartige transparente Zwischenschichten vorgesehen sein.

Um zusätzliche Merkmale in das Sicherheitselement einzubringen, liegt die semitransparente Farbschicht in bevorzugten Ausgestaltungen in Form von Zeichen, Mustern oder Codierungen vor. Darunter fallen auch Gestaltungen, bei denen die Farbschicht Aussparungen in Form von Zeichen, Mustern oder Codierungen aufweist.

In besonders bevorzugten Gestaltungen ist die semitransparente Farbschicht so gewählt, dass sie den Polarisationszustand hindurchtretenden Lichts aus dem sichtbaren Wellenlängenbereich im Wesentlichen erhält. Auf diese Weise können die von der Phasenverzögerungsschicht gebildeten Muster, Zeichen oder Codierungen sowohl in den farbvariablen als auch in den farbkonstanten Bereichen gleichermaßen sichtbar gemacht werden, wie weiter unten genauer erläutert.

Bevorzugt ist das Sicherheitselement ein Sicherheitsfaden, ein Sicherheitsband, ein Sicherheitsstreifen, ein Patch oder ein Etikett zum Aufbringen auf ein Sicherheitspapier, Wertdokument oder dergleichen. Es versteht sich, dass das Sicherheitselement auch weitere Schichten, wie etwa Schutzschichten oder zusätzliche Effektschichten mit anderen Sicherheitsmerkmalen, aufweisen kann.

Die Erfindung enthält auch ein Verfahren zum Herstellen eines Sicherheitselements der beschriebenen Art, bei dem
- auf einem Substrat übereinander ein Dünnschichtelement mit Farbkippeffekt und eine in einer Prägelackschicht vorliegende Reliefstruktur angeordnet werden,
- die Prägelackschicht mit der Reliefstruktur in Teilbereichen metallisiert wird, und
- die Reliefstruktur der teilweise metallisierten Prägelackschicht mit einer transparenten Lackschicht eingeebnet wird, deren Brechungsindex im Wesentlichen dem Brechungsindex der Prägelackschicht entspricht.

In einer vorteilhaften Verfahrensvariante wird dabei auf das Substrat zunächst ein Dünnschichtelement in der Schichtreihenfolge Reflexionsschicht, dielektrische Abstandsschicht und Absorberschicht aufgebracht, wird über dem Dünnschichtelement die Prägelackschicht aufgebracht, geprägt und teilweise metallisiert, und wird die teilweise metallisierte Prägelackschicht dann mit der transparenten Lackschicht eingeebnet.

Nach einer anderen ebenfalls vorteilhaften Verfahrensvariante wird auf das Substrat zunächst die Prägelackschicht aufgebracht, geprägt und teilweise metallisiert, wird die teilweise metallisierte Prägelackschicht mit der transparenten Lackschicht eingeebnet und wird auf die transparente Lackschicht dann ein Dünnschichtelement in der Schichtreihenfolge Absorberschicht, dielektrische Abstandsschicht und Reflexionsschicht aufgebracht.

Eine weitere vorteilhafte Verfahrensvariante besteht darin, dass auf eine erste Trägerfolie das Dünnschichtelement mit Farbkippeffekt aufgebracht wird, dass auf eine zweite Trägerfolie die Prägelackschicht aufgebracht, geprägt und teilweise metallisiert wird, und dass das Dünnschichtelement und die teilweise metallisierte Prägelackschicht dann mittels einer Kleberschicht verbunden werden.

In allen Gestaltungen können die Trägerfolien nach dem Übertragen des Sicherheitselements auf einen Datenträger entfernt werden, beispielsweise mittels einer zwischen Trägerfolie und restlichem Schichtaufbau angeordneten Releaseschicht.

In einer vorteilhaften Verfahrensvariante wird über dem Dünnschichtelement bereichsweise eine semitransparente Farbschicht angeordnet, wobei der Farbeindruck des Dünnschichtelements bei Betrachtung unter vorbestimmten Betrachtungsbedingungen an den Farbeindruck zumindest eines Teilbereichs der semitransparenten Farbschicht angepasst wird. Die semi-transparente Farbschicht wird dabei mit Vorteil aufgedruckt, insbesondere im Siebdruck-, Tiefdruck-, oder Flexodruckverfahren.

In einer weiteren vorteilhaften Verfahrensvariante wird das Sicherheitselement mit einer transparenten Phasenverzögerungsschicht versehen, die für Licht aus dem sichtbaren Wellenlängenbereich eine phasenschiebende Schicht bildet. Auch die Phasenverzögerungsschicht kann mit Vorteil auf das Dünnschichtelement aufgedruckt werden. Alternativ kann die Phasenverzögerungsschicht auf eine separate Trägerfolie aufgebracht und auf den restlichen Schichtaufbau transferiert werden.

Die Erfindung umfasst ferner ein Sicherheitspapier mit einem Sicherheitselement der beschriebenen Art sowie einen Datenträger, der mit einem solchen Sicherheitselement ausgestattet ist. Bei dem Datenträger kann es sich insbesondere um eine Banknote, ein Wertdokument, einen Pass, eine Urkunde oder eine Ausweiskarte handeln. Die beschriebenen Sicherheitselemente, Sicherheitspapiere oder Datenträger können insbesondere zur Absicherung von Gegenständen beliebiger Art eingesetzt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: einen Querschnitt durch ein Sicherheitselement nach einem Ausführungsbeispiel der Erfindung,
- Fig. 3: einen Querschnitt durch ein Sicherheitselement nach einem weiteren Ausführungsbeispiel der Erfindung,
- Fig. 4: schematisch den visuellen Eindruck des Sicherheitselements der Fig. 3 in Aufsicht,
- Fig. 5: einen Querschnitt durch ein Sicherheitselement nach einem weiteren Ausführungsbeispiel der Erfindung,
- Fig. 6: ein erfindungsgemäßes Sicherheitselement mit einer bereichsweise aufgebrachten semitransparenten Farbschicht und einem versteckten Sicherheitsmerkmal, und
- Fig. 7 bis 10: weitere Ausführungsbeispiele erfindungsgemäßer Sicherheitselemente.

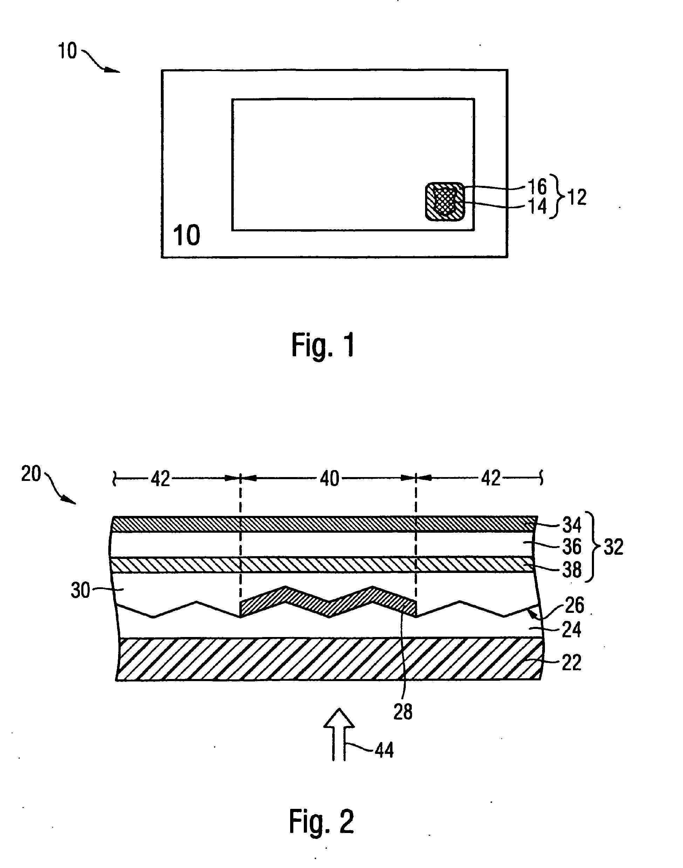

Die Erfindung wird nun am Beispiel einer Banknote erläutert. Fig.1 zeigt dazu eine schematische Darstellung einer Banknote 10 mit einem erfindungsgemäßen Sicherheitselement 12 in Form eines aufgeklebten Transferelements. Das Sicherheitselement 12 enthält ein Hologramm 14 und einen farbkippenden Bereich 16, die für den Betrachter in perfekter Passerung und ohne sich gegenseitig im visuellen Eindruck zu stören, nebeneinanderliegen.

Es versteht sich, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen außer Transferelementen beispielsweise auch Sicherheitsfäden und neben Aufsichtselementen bei geeigneter Gestaltung des Dünnschichtelements auch Durchsichtselemente infrage.

Der Aufbau erfindungsgemäßer Sicherheitselemente wird nun mit Bezug auf die Figuren 2 bis 6 näher erläutert, wobei das Prinzip der Erfindung zunächst anhand des schematischen Querschnitts der Fig. 2 beschrieben wird. Das Sicherheitselement 20 der Fig. 2 enthält eine Trägerfolie 22, beispielsweise eine PET-Folie, auf die eine UV-härtende Prägelackschicht 24 aufgebracht ist. Die Prägelackschicht 24 wurde in einem Prägeschritt mit einer Reliefstruktur 26 versehen, die beispielsweise ein gewünschtes Hologrammmotiv darstellt. In anderen Gestaltungen kann die Reliefstruktur 26 auch ein holographisches Gitterbild, eine hologrammähnliche Beugungsstruktur oder auch eine achromatische Mikrostruktur mit einem nicht farbigen, beispielsweise silbrig matten Erscheinungsbild darstellen.

Bei der Betrachtung des fertigen Sicherheitselements ist das Hologramm der Reliefstruktur 26 nur in einem vorbestimmten Teilbereich 40 sichtbar, in welchem die Prägelackschicht 24 nach der Prägung mit einer Metallisierung 28 versehen wurde. Als Metallisierung 28 kann beispielsweise eine opake Aluminiumschicht aufgedampft sein. Es versteht sich, dass die Lage des vorbestimmten Teilbereichs 40 in der Regel bereits bei der Auslegung und der Prägung der Reliefstruktur 26 berücksichtigt wird.

Weiter ist die Reliefstruktur 26 der teilweise metallisierten Prägelackschicht 24 mit einer transparenten Lackschicht 30 eingeebnet, deren Brechungsindex im Wesentlichen dem Brechungsindex der Prägelackschicht 24 entspricht. Die transparente Lackschicht 30 wird dazu in einer Schichtdicke von mehreren 100 nm, vorzugsweise von 1 µm oder mehr, auf die Prägelackschicht 24 aufgebracht. Die Brechungsindices der transparenten Lackschicht 30 und der Prägelackschicht 24 sind zudem so aufeinander abgestimmt, dass der optisch variable Effekt der Reliefstruktur 26 in den Bereichen 42 außerhalb der metallisierten Teilbereiche 40, in denen die transparente Lackschicht 30 direkt über der Prägelackschicht 24 liegt, im Wesentlichen eliminiert wird. Dies wird im Ausführungsbeispiel dadurch erreicht, dass die transparente Lackschicht 30 und die Prägelackschicht 24 Brechungsindices aufweisen, die sich um weniger als 0,1 unterscheiden.

Schließlich ist über der durch die transparente Lackschicht 30 eingeebneten Reliefstruktur 26 ein Dünnschichtelement 32 mit Farbkippeffekt angeordnet, das eine teiltransparente Absorberschicht 38 aus Chrom, eine aufgedampfte dielektrische SiO₂-Abstandsschicht 36 und eine durch eine opake Aluminiumschicht gebildete Reflexionsschicht 34 umfasst. Wie weiter oben erläutert, beruht der Farbkippeffekt eines solchen Dünnschichtelements 32 auf Interferenzeffekten durch Mehrfachreflexionen in den Teilschichten 34, 36, 38 des Elements.

Die transparente Lackschicht 30 hat durch die Abstimmung ihres Brechungsindices auf die Prägelackschicht 24 und durch die Einebnung der Reliefstruktur 26 nun zum einen die Wirkung, dass die Reliefstruktur in den nicht metallisierten Bereichen 42 im Wesentlichen keinen für den Betrachter sichtbaren optisch variablen Effekt erzeugt. Darüber hinaus vermittelt sie die Haftung zwischen der Prägelackschicht 24 und dem farbkippenden Dünnschichtelement 32.

Bei Betrachtung aus einer Betrachtungsrichtung 44 tritt in den Teilbereichen 40 der optisch variable Effekt der Reliefstruktur 26 aufgrund der Metallisierung 28 dagegen unbeeinflusst von der Lackschicht 30 in Erscheinung. Auch verhindert die opake Metallisierung 28 der Teilbereiche 40, dass dort der Farbkippeffekt des Dünnschichtelements 32 aus der Betrachtungsrichtung 44 wahrgenommen werden kann.

Insgesamt ist somit aus der Betrachtungsrichtung 44 in den metallisierten. Teilbereichen 40 nur der optisch variable Effekt des von der Reliefstruktur 26 gebildeten Hologramms sichtbar. In den nicht metallisierten Teilbereichen 42 ist die optische Wirkung der Reliefstruktur 26 durch die transparente Lackschicht 30 neutralisiert, dort tritt nur der Farbkippeffekt des Dünnschichtelements 32 in Erscheinung. Der Farbkippeffekt des Dünnschichtelements 32 und der optisch variable Effekt der Reliefstruktur 26 sind daher für den Betrachter ohne gegenseitige Beeinflussung jeweils mit ihrer spezifischen Farbwirkung sichtbar.

Gleichzeitig scheinen die farbkippenden Bereiche 42 und die optisch variablen Hologrammbereiche 40 für den Betrachter in perfekter Passerung nebeneinanderzuliegen, ohne dass das Dünnschichtelement 32 selbst gepassert zu den Reliefsstrukturen 26 angeordnet werden muss. Vielmehr ergibt sich die Passerung und die fehlende gegenseitige Beeinflussung unmittelbar aus der beschriebenen Anordnung und Ausbildung des Dünnschichtelements 32, der teilweise metallisierten Prägelackschicht 24, 28 und der transparenten Lackschicht 30 des Sicherheitselements 20.

Die transparente Lackschicht 30 ist im Ausführungsbeispiel wickelbar und tackfrei ausgebildet. Sie kann auch lasierend eingefärbt sein, um das optische Erscheinungsbild des Farbkippeffekts des Dünnschichtelements 32 gezielt zu beeinflussen.

Die Trägerfolie 22 kann nach dem Aufbringen des Sicherheitselements 20 auf einen gewünschten Datenträger als Teil des Sicherheitselements dort verbleiben, oder kann beispielsweise über eine geeignete Release- oder Trennschicht abgezogen werden. Das Dünnschichtelement 32 und die teilmetallisierte Prägelackschicht 24, 28 können auch zunächst separat auf verschiedenen Trägerfolien hergestellt und dann mittels einer geeigneten Kleberschicht miteinander verbunden werden. Auch in diesem Fall können in einem nachfolgenden Verfahrensschritt eine oder beide Trägerfolien entfernt werden.

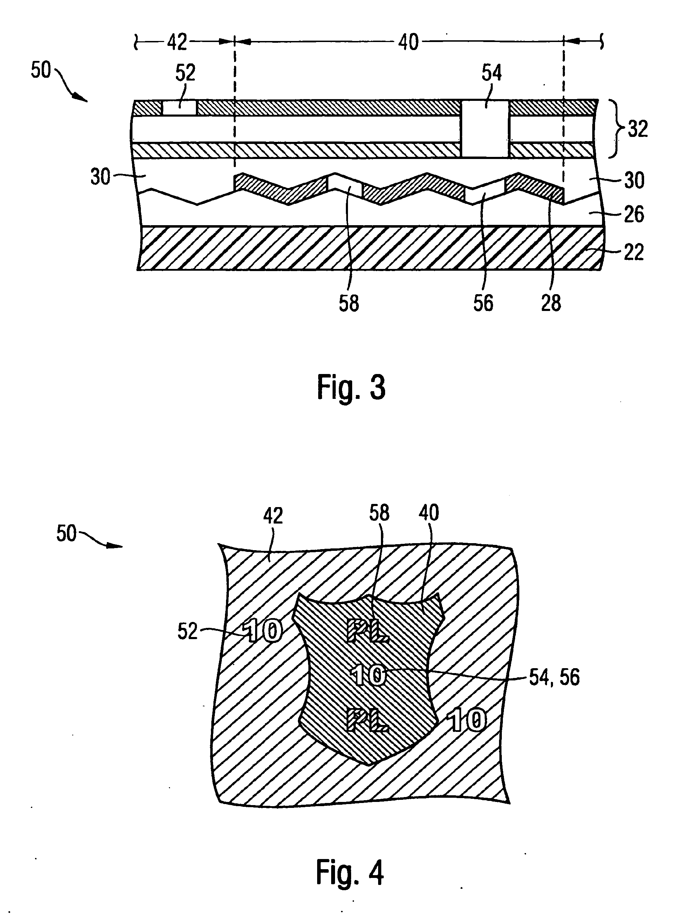

Bei dem in den Figuren 3 und 4 gezeigten Ausführungsbeispiel 50 sind zusätzlich zu den bereits in Zusammenhang mit Fig. 2 beschriebenen Elementen Aussparungen 52, 54, 56 und 58 in dem Dünnschichtelement 32 bzw. der Metallisierung 28 der Prägelackschicht 24 vorgesehen. Die Aussparungen 52, 54, 56 und 58 bilden Muster, Zeichen oder Codierungen und stellen so Negativinformationen innerhalb des farbkippenden Bereichs 42 und/oder des Hologrammbereichs 40 dar. Es versteht sich, dass in einem konkreten Sicherheitselement nicht alle gezeigten Arten von Aussparungen zugleich vorgesehen sein müssen.

Das Sicherheitselement 50 enthält zum einen Aussparungen 58, die nur in der Metallisierung 28 vorliegen, die aber keine deckungsgleichen Entsprechungen in dem Dünnschichtelement 32 haben. Im Bereich dieser Aussparungen 58, die im Ausführungsbeispiel in Gestalt der Buchstabenfolge "PL" ausgebildet sind, wie in Fig. 4 gezeigt, wird durch die Metallisierung 28 hindurch der Blick auf das farbkippende Dünnschichtelement 32 freigegeben, so dass diese Bereiche innerhalb des Hologramms 40 eine Negativinformation mit kontrastierender Farbwirkung bilden.

Weiter sind außerhalb des Hologrammbereichs 40 in der metallischen Reflexionsschicht 34 des Dünnschichtelements 32 Aussparungen 52 in Gestalt der Ziffernfolge "10" vorgesehen. Die Aussparungen 52 bilden transparente oder transluzente Bereiche innerhalb des farbkippenden Bereichs 42, die eine auffällige Kontrastwirkung im Durchlicht erzeugen. Die Aussparungen 52 können sich auch durch die Dielektrikumsschicht 36 und die Absorberschicht 38 erstrecken, wie etwa bei den Aussparungen 54 des Dünnschichtelements 32 gezeigt.

Die Aussparungen 54 des Dünnschichtelements 32 sind innerhalb des Hologrammbereichs 40 im Passer zu Aussparungen 56 in der Metallisierung 28 angeordnet, so dass dort Durchsichtsbereiche innerhalb des Hologramms 40 entstehen. In Fig. 4 sind die ausgesparten Bereiche 54, 56, ebenso wie die ausgesparten Bereiche 52, als Negativschrift in Form der Ziffernfolge "10" ausgebildet. Vorzugsweise ist die Aussparung 54 des Dünnschichtelements etwas größer als die Aussparung 56 der Metallisierung ausgebildet, um eventuelle Passerschwankungen auszugleichen und sicherzustellen, dass die Aussparung 56 im Durchlicht stets komplett hell erscheint, auch wenn die Aussparung 54 etwas in ihrer Position variiert.

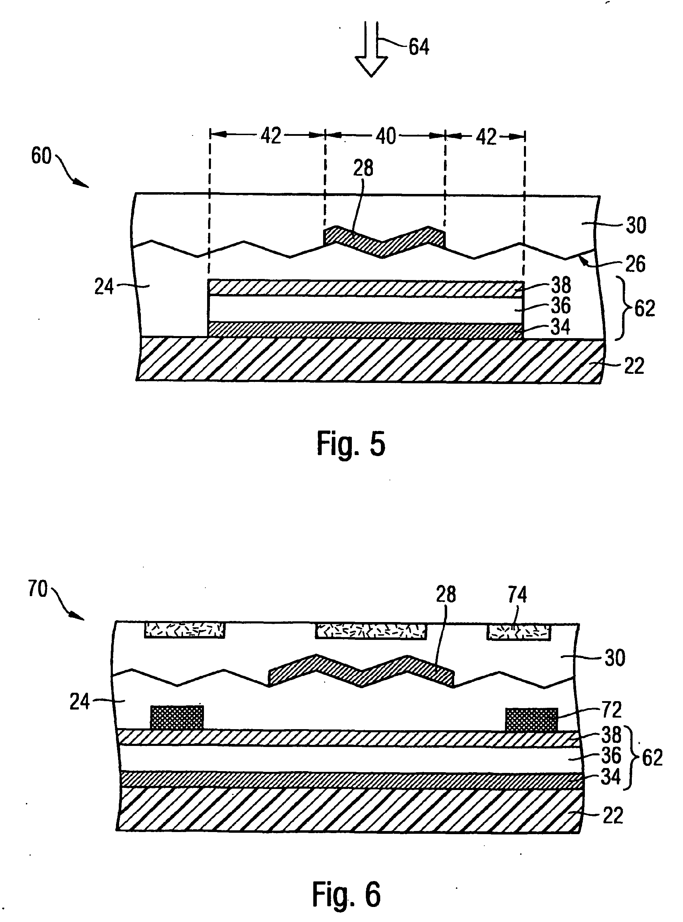

In Ausgestaltung mit einer alternativen Schichtenabfolge kann das Dünnschichtelement auch unterhalb der teilweise metallisierten Prägelackschicht angeordnet sein, wie anhand des Ausführungsbeispiels 60 der Fig. 5 illustriert.

Bei dem Sicherheitselement 60 ist ein Dünnschichtelement 62 in der Schichtreihenfolge Reflexionsschicht 34, dielektrische Abstandsschicht 36 und Absorberschicht 38 bereichsweise auf einer Trägerfolie 22 aufgebracht. Über dem Dünnschichtelement 62 ist eine Prägelackschicht 24 aufgebracht, die in Form einer Reliefstruktur 26 geprägt und in einem gewünschten Teilbereich 40 mit einer Metallisierung 28 versehen wurde.

Die teilweise metallisierte Prägelackschicht 24, 28 wurde dann mit einer 1,5 µm dicken, transparenten Lackschicht 30 eingeebnet, deren Brechungsindex im Ausführungsbeispiel um weniger als 0,1 von dem Brechungsindex der Prägelackschicht 24 abweicht. Bei Betrachtung des Sicherheitselements 60 aus einer Betrachtungsrichtung 64 tritt in den metallisierten Teilbereichen 40 nur das von der Reliefstruktur 26 gebildete Hologramm in Erscheinung, während in den nicht metallisierten Teilbereichen 42 die optische Wirkung der Reliefstruktur 26 durch die transparente Lackschicht 30 neutralisiert ist, so dass dort nur der Farbkippeffekt des Dünnschichtelements 62 in Erscheinung tritt.

Auch bei der Schichtenabfolge der Fig. 5 erscheinen die farbkippenden Bereiche 42 und die Reliefstrukturbereiche 40 für den Betrachter in perfekter Passerung und ohne gegenseitige visuelle Beeinflussung nebeneinanderzuliegen. Es versteht sich, dass auch die Gestaltung der Fig. 5 mit Aussparungen in der Metallisierung 28 und/oder dem Dünnschichtelement 62 versehen werden kann.

Die beschriebenen Gestaltungen können auch mit weiteren Elementen, beispielsweise mit einer bereichsweise auf das Dünnschichtelement aufgebrachten semitransparenten Farbschicht und/oder mit einer Phasenverzögerungsschicht, kombiniert werden, die ein zusätzliches verstecktes Sicherheitsmerkmal bildet. Beispielhaft ist in Fig. 6 eine Ausgestaltung 70 gezeigt, bei der, wie in Fig. 5, auf eine Trägerfolie 22 zunächst ein Dünnschichtelement 62 in der Schichtreihenfolge Reflexionsschicht 34, dielektrische Abstandsschicht 36 und Absorberschicht 38 aufgebracht ist.

Auf das Dünnschichtelement 62 ist bereichsweise eine semitransparente Farbschicht 72 aufgedruckt, wobei das Dünnschichtelement 62 und die semi-transparente Farbschicht 72 so aufeinander abgestimmt sind, dass sie bei Betrachtung unter senkrechtem Betrachtungswinkel im Wesentlichen denselben Farbeindruck hervorrufen. Beim Kippen des Sicherheitselements 70 verändert sich der Farbeindruck des Dünnschichtelements 62 in den nicht überdeckten Bereichen aufgrund des dort auftretenden Farbkippeffekts, während sich der Farbeindruck in den von der Farbschicht 72 überdeckten Bereichen nicht oder nur wenig verändert.

Beispielsweise kann das Dünnschichtelement 62 so ausgelegt sein, dass sich sein Farbeindruck von Magenta bei senkrechter Betrachtung zu Grün bei schräger Betrachtung ändert. Darauf abgestimmt, vermittelt die semitransparente Farbschicht 72 bei senkrechter Betrachtung einen ebenfalls magentafarbenen Farbeindruck, der, anders als der Farbeindruck des Dünnschichtelements 62, beim Kippen des Sicherheitselements im Wesentlichen unverändert bleibt. Eine solche Kombination von farbvariablen Bereichen und unmittelbar benachbarten, farbkonstanten Bereichen erhöht die visuelle Auffälligkeit des Farbkippeffekts des Dünnschichtelements 62 noch, da das menschliche Auge auf die auftretenden Farbunterschiede stärker reagiert als auf die Farbveränderung an sich.

Über dem Dünnschichtelement 62 mit der aufgedruckten semitransparenten Farbschicht 72 ist eine Prägelackschicht 24 aufgebracht, in Form einer gewünschten Reliefstruktur 26 geprägt und in einem vorbestimmten Teilbereich 40 mit einer Metallisierung 28 versehen. Die teilweise metallisierte Prägelackschicht 24, 28 ist mit einer 2 µm dicken, transparenten Lackschicht 30 eingeebnet, deren Brechungsindex im Ausführungsbeispiel um weniger als 0,2 von dem Brechungsindex der Prägelackschicht 24 abweicht.

Bis auf die zusätzlichen farbkonstanten Bereiche der Farbschicht 72 entspricht der ohne Hilfsmittel erkennbare visuelle Eindruck des Sicherheitselements 70 dem bei Fig. 5 beschriebenen Eindruck des Sicherheitselements 60. Bei dem Ausführungsbeispiel der Fig. 6 sind diese offen sichtbaren Sicherheitsmerkmale zusätzlich mit einem versteckten Sicherheitsmerkmal kombiniert, das nur mit Hilfsmitteln, etwa einem aufgelegten Polarisator, erkennbar ist. Dazu enthält das Sicherheitselement 70 eine transparente Phasenverzögerungsschicht 74, die in Form eines Musters bereichsweise über dem Dünnschichtelement 62 und der teilweise metallisierten Prägelackschicht 24, 28 angeordnet ist.

Die Phasenverzögerungsschicht 74 besteht aus einem doppelbrechenden Material, beispielsweise aus nematischem flüssigkristallinem Material. Die Schichtdicke der Phasenverzögerungsschicht 74 ist typischerweise so gewählt, dass ihre Phasenverzögerung einem Gangunterschied zwischen etwa λ/6 und etwa λ/2, vorzugsweise etwa λ/4 entspricht, wobei λ eine Wellenlänge aus dem sichtbaren Spektralbereich darstellt. Während die Phasenverzögerungsschicht 74 bei Betrachtung des Sicherheitselements 70 mit gewöhnlichem unpolarisiertem Licht und ohne Hilfsmittel praktisch nicht zu erkennen ist, treten bei Betrachtung mit einem aufgelegten Polarisator starke Kontrastunterschiede zwischen den Bereichen mit und ohne Phasenverzögerungsschicht 74 hervor. Das Vorhandensein und die Form des von der Phasenverzögerungsschicht gebildeten Musters kann so zur zusätzlichen Echtheitsprüfung, beispielsweise am Point of Sale oder in Banken, eingesetzt werden.

Die Funktionsweise des versteckten Sicherheitsmerkmals sei kurz am Beispiel einer λ/4-Phasenverzögerungsschicht 74 und eines aufgelegten Zirkularpolarisators, der nur rechtszirkular polarisiertes Licht transmittiert, erläutert. Bei diesen Bedingungen wird von einfallendem unpolarisiertem Licht nur der rechtszirkular polarisierte Anteil von dem Zirkularpolarisator durchgelassen. In den Teilbereichen des Sicherheitselements ohne Phasenverzögerungsschicht 74 wird das rechtszirkular polarisierte Licht von der metallischen Reflektorschicht 34 des Dünnschichtelementes 62 mit umgekehrter Polarisationsrichtung, also als linkszirkular polarisiertes Licht, ren flektiert. Das reflektierte linkszirkular polarisierte Licht wird vom Zirkularpolarisator gesperrt, so dass diese Teilbereiche für den Betrachter dunkel erscheinen.

In den Teilbereichen mit Phasenverzögerungsschicht 74 wird das rechtszirkular polarisierte Licht dagegen durch die Phasenverzögerungsschicht vor der Reflexion an der Reflektorschicht 34 in linear polarisiertes Licht gewandelt. Das nach Reflexion unverändert linear polarisierte Licht durchläuft die Phasenverzögerungsschicht 74 erneut und wird dabei in rechtszirkular polarisiertes Licht gewandelt, das den Zirkularpolarisator bei den gewählten Voraussetzungen ohne Weiteres passieren kann. In diesen Teilbereichen erscheint das Muster des offenen Sicherheitsmerkmals für den Betrachter daher im Wesentlichen unverändert hell.

Von Bedeutung ist dabei auch, dass die semitransparente Farbschicht 72 den Polarisationszustand des durchtretenden Lichts weitgehend erhält, so dass das von der Phasenverzögerungsschicht 74 gebildete Muster in den farbvariablen und den farbkonstanten Bereichen gleichermaßen sichtbar gemacht werden kann. Es versteht sich jedoch, dass die Phasenverzögerungsschicht auch in Gestaltungen ohne semitransparente Farbschicht eingesetzt werden kann und dass umgekehrt eine semitransparente Farbschicht auch in Gestaltungen ohne Phasenverzögerungsschicht vorgesehen sein kann.

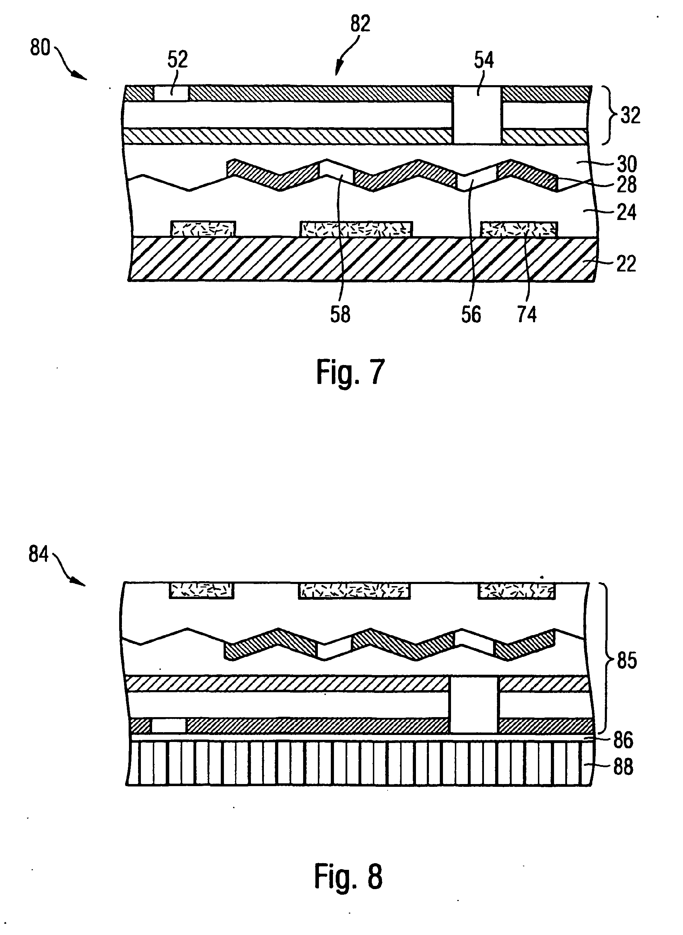

Fig. 7 zeigt als weitere Variante der Erfindung ein Transferelement 80. Das Transferelement 80 enthält als Trägerfolie eine PET-Folie 22, die in Form eines Musters bereichsweise mit einer transparenten Phasenverzögerungsschicht 74 beschichtet ist. Auf der mit der Phasenverzögerungsschicht 74 versehenen Trägerfolie ist, wie in dem Ausführungsbeispiel der Fig. 3, eine Prägelackschicht 24 aufgebracht, ist diese in Form einer gewünschten Reliefstruktur geprägt und in einem vorbestimmten Teilbereich mit einer Metallisierung 28 versehen. Die teilweise metallisierte Präglackschicht ist mit einer geeignet abgestimmten, transparenten Lackschicht 30 eingeebnet, und über der eingeebneten Reliefstruktur ist ein Dünnschichtelement 32 mit Farbkippeffekt angeordnet. In dem Dünnschichtelement 32 und der Metallisierung 28 können Aussparungen 52, 54, 56, 58 vorgesehen sein, wie oben bereits beschrieben. Diese Variante stellt eine Transferlösung dar, bei der das gezeigte Transferelement 70 mit der Funktionsseite 82 auf einen Untergrund geklebt und die Trägerfolie 22 kann bei Bedarf abgezogen werden.

Bei dem Ausführungsbeispiel 84 der Fig. 8 ist das Transferelement 80 der Fig. 7 mittels einer Kleberschicht 86 auf eine zweite Trägerfolie 88 geklebt und die Trägerfolie 22 abgezogen worden. Dadurch erhält man ein Sicherheitselement 84 mit einer Trägerfolie 88 mit fest verankerten Funktionsschichten 85, das auf ein gewünschtes Zielsubstrat geklebt werden kann.

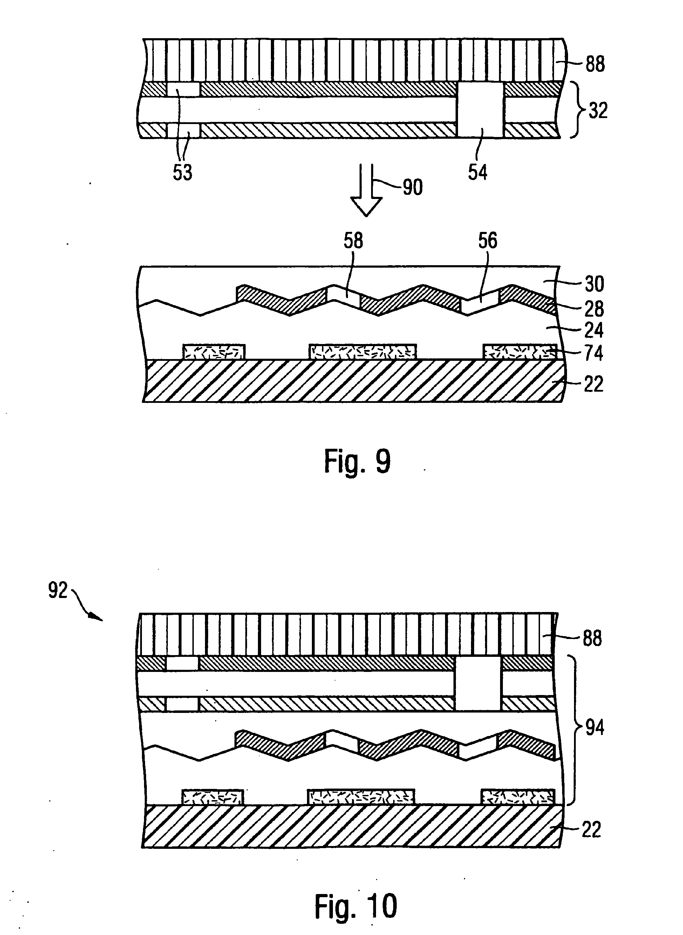

Bei einer weiteren Erfindungsvariante, die in Fig. 9 dargestellt ist, wird eine erste Trägerfolie 22 in Form eines Musters bereichsweise mit einer transparenten Phasenverzögerungsschicht 74 beschichtet, darüber eine Prägelackschicht 24 aufgebracht, in Form einer gewünschten Reliefstruktur geprägt und in einem vorbestimmten Teilbereich mit einer Metallisierung 28 versehen. In der Metallisierung 28 können in der oben beschriebenen Art Aussparungen 56, 58 vorgesehen sein. Dann wird die Reliefstruktur mit einer transparenten Lackschicht 30 eingeebnet, deren Brechungsindex im Wesentlichen dem Brechungsindex der Prägelackschicht 24 entspricht.

Eine zweite Trägerfolie 88 wird partiell mit einem Dünnschichtelement 32 mit Farbkippeffekt versehen, wobei die Aussparungen in dem Dünnschichtelement 32, wie etwa die Aussparung 54, durch die gesamte Interferenzschicht hindurchgreifen können. Alternativ können, wie bei der Aussparung 53, auch die Absorberschicht und die Reflexionsschicht des Dünnschichtelements 32 separat ausgespart werden.

Dann werden die erste Trägerfolie 22 und die zweite Trägerfolie 88 zusammengeführt 90 und verklebt, so dass der in Fig. 10 gezeigte Schichtenverbund 92 erhalten wird. Von diesem Schichtenverbund 92 wird eine der beiden Trägerfolien 22, 88 abgezogen, so dass eine einzige Trägerfolie mit den Funktionsschichten 94 verbleibt, welche nachfolgend auf ein gewünschtes Zielsubstrat aufgeklebt wird. Vorzugsweise dient die Lackschicht 30 als Kleber.

Die Dünnschichtelemente können in allen Gestaltungen auch in der Form Absorberschicht / Dielektrikumsschicht / Absorberschicht ausgebildet sein, wobei auch größere Schichtstapel mit der Abfolge Absorberschicht 1/ Dielektrikumsschicht 1/ Absorberschicht 2 / Dielektrikumsschicht 2 ... Dielektrikumsschicht N-1 / Absorberschicht N, mit N = 3, 4, 5..., möglich sind. Auch derartige Schichtenfolgen weisen einen Farbkippeffekt auf, sind aber nicht opak, so dass der Farbkippeffekt auch von der Rückseite des Sicherheitselements sichtbar ist. Sicherheitselemente mit derartigen Dünnschichtelementen können insbesondere bei Dokumenten mit Durchsichtsbereichen zum Einsatz kommen.

Die angesprochenen Aussparungen in den Reflexionsschichten können auch rasterartig, vorzugsweise mit einem geringen Flächenanteil von 40% oder weniger, angelegt sein. Die Aussparungen der Reflexionsschichten fallen dann im Auflicht praktisch nicht auf, sondern treten nur im Durchlicht in Erscheinung.

## Patentansprüche

1. Sicherheitselement (12) zur Absicherung von Wertgegenständen bei dem
- übereinander ein Dünnschichtelement (32) mit Farbkippeffekt und eine in einer Prägelackschicht (24) vorliegende Reliefstruktur (26) angeordnet sind,
**dadurch gekennzeichnet, dass**
- die Prägelackschicht (24) mit der Reliefstruktur (26) in Teilbereichen (40) metallisiert ist, und
- die Reliefstruktur (26) der teilweise metallisierten Prägelackschicht (24) mit einer transparenten Lackschicht (30) eingeebnet ist, deren Brechungsindex im Wesentlichen dem Brechungsindex der Prägelackschicht (24) entspricht.

2. Sicherheitselement (12) nach Anspruch 1, **dadurch gekennzeichnet, dass** die transparente Lackschicht (30) eine Schichtdicke von mehr als 800 nm, vorzugsweise von mehr als 1.000 nm aufweist.

3. Sicherheitselement (12) nach Anspruch 1 oder 2, **dadurch gekennzeichnet, dass** die Differenz der Brechungsindices von Prägelackschicht (24) und transparenter Lackschicht (30) weniger als 0,3, vorzugsweise weniger als 0,1 beträgt.

4. Sicherheitselement (12) nach wenigstens einem der Ansprüche 1 bis 3, **dadurch gekennzeichnet, dass** die Reliefstruktur (26) eine diffraktive Struktur, wie etwa ein Hologramm, ein holographisches Gitterbild oder eine hologrammähnliche Beugungsstruktur darstellt, oder eine achromatische Struktur, wie etwa eine Mattstruktur, eine Mikrospiegelanordnung, ein Blazegitter mit einem sägezahnartigen Furchenprofil oder eine Fresnellinsen-Anordnung darstellt.

5. Sicherheitselement (12) nach wenigstens einem der Ansprüche 1 bis 4, **dadurch gekennzeichnet, dass** das Dünnschichtelement (32) eine Reflexionsschicht (34); eine Absorberschicht (38) und eine zwischen der Reflexionsschicht (34) und der Absorberschicht (38) angeordnete dielektrische Abstandsschicht (36) enthält.

6. Sicherheitselement (12) nach Anspruch 5, **dadurch gekennzeichnet, dass** das Dünnschichtelement (32) in der Schichtreihenfolge Absorberschicht (38), dielektrische Abstandsschicht (36) und Reflexionsschicht (34) über der teilweise metallisierten Prägelackschicht (24) und der transparenten Lackschicht (30) angeordnet ist, oder die teilweise metallisierte Prägelackschicht (24) und die transparente Lackschicht (30) über einem Dünnschichtelement (32) der Schichtreihenfolge Reflexionsschicht (34), dielektrische Abstandsschicht (36) und Absorberschicht (38) angeordnet sind.

7. Sicherheitselement (12) nach wenigstens einem der Ansprüche 1 bis 4, **dadurch gekennzeichnet, dass** das Dünnschichtelement (32) zumindest eine erste Absorberschicht, eine zweite Absorberschicht und eine zwischen den beiden Absorberschichten angeordnete dielektrische Abstandsschicht (36) enthält.

8. Sicherheitselement (12) nach wenigstens einem der Ansprüche 1 bis 7, **dadurch gekennzeichnet, dass** die Metallisierung der Prägelackschicht (24) mit Aussparungen (52, 54, 56, 58) in Form von Mustern, Zeichen oder Codierungen versehen ist.

9. Sicherheitselement (12) nach wenigstens einem der Ansprüche 1 bis 8, **dadurch gekennzeichnet, dass** das Dünnschichtelement (32) eine Reflexionsschicht (34) mit Aussparungen (52, 54, 56, 58) in Form von Mustern, Zeichen oder Codierungen aufweist, die transparente oder transluzente Bereiche in dem Dünnschichtelement (32) bilden, und das Dünnschichtelement (32) und die Metallisierung (28) der Prägelackschicht (24) bevorzugt deckungsgleiche Aussparungen aufweisen.

10. Sicherheitselement (12) nach wenigstens einem der Ansprüche 1 bis 9, **dadurch gekennzeichnet, dass** das Sicherheitselement (12) bereichsweise mit einer transparenten Phasenverzögerungsschicht versehen ist, die für Licht aus dem sichtbaren Wellenlängenbereich eine phasenschiebende Schicht bildet, und die Phasenverzögerungsschicht bevorzugt in Form von Mustern, Zeichen oder einer Codierung vorliegt.

11. Sicherheitselement (12) nach wenigstens einem der Ansprüche 1 bis 10, **dadurch gekennzeichnet, dass** über dem Dünnschichtelement (32) bereichsweise eine semitransparente Farbschicht (72) angeordnet ist, wobei der Farbeindruck des Dünnschichtelements (32) bei Betrachtung unter vorbestimmten Betrachtungsbedingungen an den Farbeindruck zumindest eines Teilbereichs der semitransparenten Farbschicht angepasst ist.

12. Verfahren zum Herstellen eines Sicherheitselements (12) nach wenigstens einem der Ansprüche 1 bis 11, bei dem
- auf einem Substrat übereinander ein Dünnschichtelement (32) mit Farbkippeffekt und eine in einer Prägelackschicht (24) vorliegende Reliefstruktur (26) angeordnet werden,
dadurch gekenzeichnet, dass
- die Prägelackschicht (24) mit der Reliefstruktur (26) in Teilbereichen (40) metallisiert wird, und
- die Reliefstruktur (26) der teilweise metallisierten Prägelackschicht (24) mit einer transparenten Lackschicht (30) eingeebnet wird, deren Brechungsindex im Wesentlichen dem Brechungsindex der Prägelackschicht (24) entspricht.

13. Sicherheitspapier für die Herstellung von Sicherheits- oder Wertdokumente, wie Banknoten, Schecks, Ausweiskarten, Urkunden oder dergleichen, das mit einem Sicherheitselement (12) nach wenigstens einem der Ansprüche 1 bis 12 ausgestattet ist.

14. Datenträger, insbesondere Markenartikel, Wertdokument oder dergleichen, mit einem Sicherheitselement (12) nach einem der Ansprüche 1 bis 12.

15. Verwendung eines Sicherheitselement (12) nach wenigstens einem der Ansprüche 1 bis 11 eines Sicherheitspapiers nach Anspruch 13, oder eines Datenträgers nach Anspruch 14 zur Fälschungssicherung von Waren beliebiger Art.

## Claims

1. A security element (12) for securing valuable articles, in which
- a thin-film element (32) having a color-shift effect and a relief pattern (26) present in an embossing lacquer layer (24) are stacked,
**characterized in that**
- the embossing lacquer layer (24) having the relief pattern (26) is metalized in sub-regions (40), and
- the relief pattern (26) of the partially metalized embossing lacquer (24) layer is leveled with a transparent lacquer layer (30) whose refractive index substantially corresponds to the refractive index of the embossing lacquer layer (24).

2. The security element (12) according to claim 1, **characterized in that** the transparent lacquer layer (30) exhibits a layer thickness of more than 800 nm, preferably of more than 1,000 nm.

3. The security element (12) according to claim 1 or 2, **characterized in that** the difference in the refractive indices of the embossing lacquer layer (24) and the transparent lacquer layer (30) is less than 0.3, preferably less than 0.1.

4. The security element (12) according to at least one of claims 1 to 3, **characterized in that** the relief pattern (26) constitutes a diffractive pattern, such as a hologram, a holographic grating image or a hologram-like diffraction pattern, or an achromatic pattern, such as a matte pattern, a micromirror arrangement, a blazed lattice having a sawtooth-like groove profile or a Fresnel lens arrangement.

5. The security element (12) according to at least one of claims 1 to 4, **characterized in that** the thin-film element (32) includes a reflection layer (34), an absorber layer (38) and a dielectric spacing layer (36) arranged between the reflection layer (34) and the absorber layer (38).

6. The security element (12) according to claim 5, **characterized in that** the thin-film element (32) is arranged over the partially metalized embossing lacquer layer (24) and the transparent lacquer layer (30) in the layer sequence absorber layer (38), dielectric spacing layer (36) and reflection layer (34), or that the partially metalized embossing lacquer layer (24) and the transparent lacquer layer (30) are arranged over a thin-film element (32) of the layer sequence reflection layer (34), dielectric spacing layer (36) and absorber layer (38).

7. The security element (12) according to at least one of claims 1 to 4, **characterized in that** the thin-film element (32) includes at least a first absorber layer, a second absorber layer and a dielectric spacing layer (36) arranged between the two absorber layers.

8. The security element (12) according to at least one of claims 1 to 7, **characterized in that** the metalization of the embossing lacquer layer (24) is provided with gaps (52, 54, 56, 58) in the form of patterns, characters or codes.

9. The security element (12) according to at least one of claims 1 to 8, **characterized in that** the thin-film element (32) exhibits a reflection layer (34) having gaps (52, 54, 56, 58) in the form of patterns, characters or codes that form transparent or translucent regions in the thin-film element (32), and that the thin-film element (32) and the metalization (28) of the embossing lacquer layer (24) preferably exhibit congruent gaps.

10. The security element (12) according to at least one of claims 1 to 9, **characterized in that** the security element (12) is provided in some regions with a transparent phase-delay layer that forms a phase-shifting layer for light from the visible wavelength range, and that the phase-delay layer is present preferably in the form of patterns, characters or a code.

11. The security element (12) according to at least one of claims 1 to 10, **characterized in that,** in some regions, a semi-transparent ink layer (72) is arranged over the thin-film element (32), the color impression of the thin-film element (32) being coordinated with the color impression of at least a subregion of the semi-transparent ink layer when viewed under predetermined viewing conditions.

12. A method for manufacturing a security element (12) according to at least one of claims 1 to 11, in which
- a thin-film element (32) having a color-shift effect and a relief pattern (26) present in an embossing lacquer layer (24) are stacked on a substrate,
**characterized in that**
- the embossing lacquer layer (24) having the relief pattern (26) is metalized in sub-regions (40), and
- the relief pattern (26) of the partially metalized embossing lacquer layer (24) is leveled with a transparent lacquer layer (30) whose refractive index substantially corresponds to the refractive index of the embossing lacquer layer (24).

13. A security paper for manufacturing security or value documents, such as banknotes, checks, identification cards, certificates or the like, that are furnished with a security element (12) according to at least one of claims 1 to 12.

14. A data carrier, especially a branded article, value document or the like, having a security element (12) according to one of claims 1 to 12.

15. A use of a security element (12) according to at least one of claims 1 to 11, of a security paper according to claim 13, or of a data carrier according to claim 14 for securing goods of any kind against counterfeiting.

## Revendications

1. Elément de sécurité (12) pour la protection d'objets de valeur, dans lequel
- un élément en couche mince (32), présentant un effet goniochromatique, et une structure en relief (26), présente dans une couche de vernis d'estampage (24), sont disposés l'un au-dessus de l'autre,
**caractérisé en ce que**
- la couche de vernis d'estampage (24), avec la structure en relief (26), est métallisée dans des zones partielles (40), et
- la structure en relief (26) de la couche de vernis d'estampage (24) partiellement métallisée est nivelée à l'aide d'une couche de vernis transparente (30), dont l'indice de réfraction correspond pour l'essentiel à l'indice de réfraction de la couche de vernis d'estampage (24).

2. Elément de sécurité (12) selon la revendication 1, **caractérisé en ce que** la couche de vernis transparente (30) présente une épaisseur de couche supérieure à 800 nm, de préférence supérieure à 1000 nm.

3. Elément de sécurité (12) selon la revendication 1 ou 2, **caractérisé en ce que** la différence entre l'indice de réfraction de la couche de vernis d'estampage (24) et celui de la couche de vernis transparente (30) est inférieure à 0,3, de préférence inférieure à 0,1.

4. Elément de sécurité (12) selon au moins l'une des revendications 1 à 3, **caractérisé en ce que** la structure en relief (26) représente une structure diffractive, telle par exemple qu'un hologramme, un motif holographique à réseau diffractant ou une structure de diffraction analogue à un hologramme, ou représente une structure achromatique, telle que par exemple une structure mate, un arrangement de micromiroirs, un réseau blazé ayant un profil de cannelures en dents de scie, ou un arrangement de lentilles de Fresnel.

5. Elément de sécurité (12) selon au moins l'une des revendications 1 à 4, **caractérisé en ce que** l'élément en couche mince (32) contient une couche réfléchissante (34), une couche absorbante (38) et une couche d'écartement diélectrique (36), disposée entre la couche réfléchissante (34) et la couche absorbante (38).

6. Elément de sécurité (12) selon la revendication 5, **caractérisé en ce que** l'élément en couche mince (32) est, dans la séquence de couches couche absorbante (38)/couche d'écartement diélectrique (36)/couche réfléchissante (34), disposé au-dessus de la couche de vernis d'estampage (24) partiellement métallisée et de la couche de vernis transparente (30), ou que la couche de vernis d'estampage (24) partiellement métallisée et la couche de vernis transparente (30) sont disposées au-dessus d'un élément en couche mince (32) de la séquence de couches couche réfléchissante (34)/couche d'écartement diélectrique (36)/couche absorbante (38).

7. Elément de sécurité (12) selon au moins l'une des revendications 1 à 4, **caractérisé en ce que** l'élément en couche mince (32) contient au moins une première couche absorbante, une deuxième couche absorbante, et une couche d'écartement diélectrique (36), disposée entre les deux couches absorbantes.

8. Elément de sécurité (12) selon au moins l'une des revendications 1 à 7, **caractérisé en ce que** la métallisation de la couche de vernis d'estampage (24) est pourvue d'évidements (52, 54, 56, 58) sous forme de modèles, de caractères ou de codages.

9. Elément de sécurité (12) selon au moins l'une des revendications 1 à 8, **caractérisé en ce que** l'élément en couche mince (32) présente une couche réfléchissante (34) comportant des évidements (52, 54, 56, 58) sous forme de modèles, de caractères ou de codages, qui forment des zones transparentes ou translucides dans l'élément en couche mince (32), et l'élément en couche mince (32) et la métallisation (28) de la couche de vernis d'estampage (24) présentent de préférence des évidements coïncidents.

10. Elément de sécurité (12) selon au moins l'une des revendication 1 à 9, **caractérisé en ce que** l'élément de sécurité (12) est, par zones, pourvu d'une couche transparente de retard de phase, qui pour la lumière provenant de la gamme des longueurs d'onde visibles, forme une couche de déphasage, et la couche de retard de phase se présente de préférence sous forme de modèles, de caractères ou d'un codage.

11. Elément de sécurité (12) selon au moins l'une des revendications 1 à 10, **caractérisé en ce qu'**une couche colorée semi-transparente (72) est par zones disposée au-dessus de l'élément en couche mince (32), l'impression colorée de l'élément en couche mince (32) - l'observation étant effectuée dans des conditions d'observation prédéterminées - étant adaptée à l'impression colorée d'au moins une zone partielle de la couche colorée semi-transparente.

12. Procédé de fabrication d'un élément de sécurité (12) selon au moins l'une des revendications 1 à 11, dans lequel
- on dispose sur un substrat, l'un au-dessus de l'autre, un élément en couche mince (32) présentant un effet goniochromatique, et une structure en relief (26) présente dans une couche de vernis d'estampage (24),
**caractérisé en ce que**
- la couche de vernis d'estampage (24), avec la structure en relief (26), est métallisée dans des zones partielles (40), et
- la structure en relief (26) de la couche de vernis d'estampage (24) partiellement métallisée est nivelée à l'aide d'une couche de vernis transparente (30), dont l'indice de réfraction correspond pour l'essentiel à l'indice de réfraction de la couche de vernis d'estampage (24).

13. Papier de sécurité pour la fabrication de documents de sécurité et de valeur tels que des billets de banque, des chèques, des cartes d'identité, des certificats ou analogues, qui est muni d'un élément de sécurité (12) selon au moins l'une des revendications 1 à 12.

14. Support de données, en particulier un article de marque, un document de valeur ou analogue, comportant un élément de sécurité (12) selon l'une des revendications 1 à 12.

15. Utilisation d'un élément de sécurité (12) selon au moins l'une des revendications 1 à 11, d'un papier de sécurité selon la revendication 13 ou d'un support de données selon la revendication 14, pour la protection d'articles de nature quelconque contre une falsification.
